(19) Europäisches Patentamt
European Patent Office
Office européen des brevets

(11) Veröffentlichungsnummer: **0 538 323 B1**

(12) **EUROPÄISCHE PATENTSCHRIFT**

(45) Veröffentlichungstag der Patentschrift: **31.08.94**

(51) Int. Cl.5: **C08F 291/00**, C08F 265/02, A61L 15/00

(21) Anmeldenummer: **91912648.2**

(22) Anmeldetag: **02.07.91**

(86) Internationale Anmeldenummer:
**PCT/EP91/01232**

(87) Internationale Veröffentlichungsnummer:
**WO 92/01008 (23.01.92 92/03)**

(54) **VERFAHREN ZUR HERSTELLUNG WASSEROUELLBARER PRODUKTE UNTER VERWENDUNG VON FEINSTANTEILEN WASSEROUELLBARER POLYMERER.**

(30) Priorität: **09.07.90 DE 4021847**

(43) Veröffentlichungstag der Anmeldung:
**28.04.93 Patentblatt 93/17**

(45) Bekanntmachung des Hinweises auf die Patenterteilung:
**31.08.94 Patentblatt 94/35**

(84) Benannte Vertragsstaaten:
**AT BE CH DE DK ES FR GB GR IT LI LU NL SE**

(56) Entgegenhaltungen:
**EP-A- 0 233 014**
**FR-A- 2 559 158**

(73) Patentinhaber: **Chemische Fabrik Stockhausen GmbH**
**Bäkerpfad 25**
**D-47805 Krefeld (DE)**

(72) Erfinder: **BREHM, Helmut**
**Dachsstrasse 22**
**D-4150 Krefeld (DE)**
Erfinder: **DAHMEN, Kurt**
**Von-Velsen-Strasse 6**
**D-4050 Möchengladbach (DE)**
Erfinder: **MERTENS, Richard**
**Dahlerdyk 116 a**
**D-4150 Krefeld (DE)**

(74) Vertreter: **Klöpsch, Gerald, Dr.-Ing. Patentanwalt**
**An Gross St. Martin 6**
**D-50667 Köln (DE)**

**Beschreibung**

Die Erfindung betrifft ein Verfahren zur Umwandlung von Feinstanteilen von wasserquellbaren Polymeren in eine anwendungstechnisch wiederverwertbare Form, d.h. ein Recyclingverfahren für diese Feinstanteile.

Bei der Herstellung wasserquellbarer Polymerer entstehen zwangsläufig Anteile feiner Partikel, die aufgrund ihrer geringen Größe, z.B. in Windeln und Inkontinenzartikeln, nicht verwendet werden können, da sie zu Dosierschwierigkeiten und Staubentwicklung führen sowie eine reduzierte Quellkapazität haben. Feinanteile in wasserquellbaren Polymerpartikeln führen zu Produkten mit verringerter Quellkapazität, verursacht durch das sogenannte Blocken, d.h. durch ein Sperren des Partikelhaufwerks gegen vordringende Flüssigkeit. Aus den genannten Gründen werden polymere Feinanteile kleiner 200 $\mu$m, bevorzugt kleiner 100 $\mu$m, vor ihrem Einsatz in Hygieneartikel abgetrennt.

Die Herstellung wasserquellbarer Polymerer ist bekannt. Ein typisches Verfahren zur Herstellung wasserquellbarer Polymerpartikel durch inverse Suspensionspolymerisation einer wäßrigen Lösung aus Acrylsäure und Alkali- bzw. Ammoniumacrylat in einem Kohlenwasserstoff und Vernetzung des Polymeren wird in der US-PS 4,698,404 beschrieben.

Die Europäische Patentanmeldung A1 0205674 beschreibt die Lösungspolymerisation im wesentlichen säuregruppentragender Monomerer in Gegenwart eines vernetzend wirkenden Mittels. Nach der Neutralisation der Säuregruppen des Polymeren zu mindestens 25 % und Trocknung des Polymergels wird ein wasserquellbares Polymeres von hoher Gelstärke und mit geringen Mengen an extrahierbaren Anteilen gewonnen.

Die Europäische Patentanmeldung A2 0312952 beschreibt die Polymerisation von Carboxylgruppen tragenden Monomeren, die zu mindestens 20 % neutralisiert sind, in Gegenwart dispergierter Vernetzer. Die kontinuierliche Copolymerisation einer Acrylsäure enthaltenden Monomerlösung, wobei die Acrylsäure zumindest zu 20 % in neutralisierter Form vorliegt, wird in der Europäischen Patentanmeldung A2 0280541 beschrieben.

Bei jedem Verfahren zur Herstellung wasserquellbarer Polymerpartikel, sei es durch Lösungs-, Emulsions-, Suspensions- oder Pfropfpolymerisation, entstehen Feinstanteile, die die anwendungstechnischen Eigenschaften des Polymeren verschlechtern. Die Feinstanteile entstehen zwangsläufig während der Polymerisation oder einem der nachfolgenden Aufarbeitungsschritte. Diese Feinstanteile kleiner 200 $\mu$m, insbesondere kleiner 100 $\mu$m, werden vor der Verwendung in Hygieneartikeln, z.B. durch Sieben, aus dem Haufwerk abgetrennt. Je nach Lage des Siebschnittes fallen bis zu 25 % wasserquellbare Feinstanteile an, die bisher sehr speziellen Anwendungen in begrenztem Maße zugeführt werden.

Da die wasserquellbaren polymeren Feinstanteile einen erheblichen Wert darstellen, hat es nicht an Versuchen gefehlt, sie in eine wiederverwertbare Form, beispielsweise durch Agglomeration, zu überführen. So beschreibt die DE-OS 37 41 157 den Aufbau von Granulaten durch thermische Behandlung einer Mischung wasserquellbarer, polymerer Feinstpartikel mit schmelz- bzw. sinterbaren pulverförmigen Feststoffen.

In der DE-OS 37 41 158 wird ein Verfahren zur Agglomeration von wasserquellbaren polymeren Feinstanteilen beschrieben, das dadurch gekennzeichnet ist, daß Lösungen oder Dispersionen zum Aufbau von Agglomeraten eingesetzt werden. Der Nachteil agglomerierter Feinstanteile ist ihre geringe Stabilität bei mechanischer Belastung, wie sie z.B. beim Transport und bei der Verarbeitung auftritt.

In der US-PS 4,950,692 wird ein Verfahren zur Wiederaufarbeitung von wasserquellbaren polymeren Feinstpartikeln zu einem sogenannten Superabsorber, d.h. einem Polymermaterial, welches große Mengen Wasser oder Körperflüssigkeiten absorbieren kann, beschrieben, bei dem die Feinstpartikel mittels einer wäßrigen Lösung in ein Gel überführt und das Gel gemahlen und getrocknet wird. Die zur Gelbildung verwendete wäßrige Lösung enthält ein Persulfatsalz. Die hier beschriebene Behandlung der wasserquellbaren polymeren Feinstpartikel mit Wasser mit dem Ziel, ein homogenes Gel zu erhalten, ist verfahrenstechnisch aufwendig, da eine Verteilung des Wassers durch das eingangs beschriebene Blocken behindert wird und nichtbenetztes, trockenes Polymeres eingeschlossen wird. Ein Polymergel, das 30 % wasserquellbares Polymeres enthält, - wie es z.B. nach der Lösungspolymerisation von Acrylsäure, die zu 70 % teilneutralisiert vorliegt, erhalten wird - ist nur noch in Knetmaschinen zu behandeln. Weiterhin benötigt dieses Verfahren zur Überführung von wasserquellbaren polymeren Feinstpartikeln in ein Gel große Kengen Wasser, das durch Trocknung wieder entfernt werden muß.

In "Hauben-Weyl, Methoden der organischen Chemie, Band XIV/I Seite 1043 (1961) wird die Herstellung einer leicht gießbaren Masse beschrieben, die aus einer Suspension von Polymethacrylsäuremethylester-Pulver zweier unterschiedlicher Korngrößen in monomerem Methacrylsäuremethylester besteht.

Die Rückführung von wasserquellbaren, polymeren Feinstanteilen mit dem Ziel, diese Feinstpartikel homogen verteilt einzupolymerisieren, stößt jedoch bei der Polymerisation wäßriger Monomerlösungen auf erhebliche verfahrenstechnische Schwierigkeiten.

Die polymeren Feinstanteile haben vor allem die Eigenschaft, bei Kontakt mit wäßrigen Systemen und/oder Wasserdampf Zu quellen. Diese Eigenschaft wird geradezu ausgenutzt in der DE-PS 27 37 994, die ein Verfahren zur Herstellung von Hydrogelen beschreibt, indem eine wäßrige Monomerlösung, z.B. aus Acrylsäuresalz und Acrylamid, durch ionisierende Strahlung polymerisiert wird. Die Methode benutzt Verdickungsmittel als Verfahrenshilfsmittel, um die wäßrige Monomerenmischung unbeweglich zu machen und sie daran zu hindern zu fließen. Neben hochmolekularen, wasserlöslichen Polymerisaten, die sich in der Monomerenlösung lösen und diese verdicken, können auch wasserunlösliche Polyelektrolyt-Hydrogele als Verdickungsmittel wirksam sein, wenn sie einer Teilchengröße kleiner 250 µm entsprechen.

Die unerwünschte Quellung der Polymerpartikel und das damit verbundene Verbacken kann bisher nur vermieden werden, wenn ein unpolares, organisches Lösungsmittel als Dispersionsmedium für die Pulverpartikel verwendet wird, wie in der US-PS 4,727,097 beschrieben ist. In dieser Patentschrift werden wasserabsorbierende Harze in z.B. n-Hexan, Cyclohexan oder Ligroin dispergiert und anschließend mit hydrophilen Monomeren imprägniert. Die Verwendung solcher flüchtiger, brennbarer, unpolarer Lösungsmittel macht aber das Verfahren aus ökologischen und ökonomischen Gründen unvorteilhaft. Selbst die mögliche Mitverwendung polarer, mit Wasser mischbarer Lösungsmittel, wie z.B. Methanol, Ethanol, Aceton oder Dioxan, die den Quellvorgang der Polymerpulver im Gemisch mit Wasser unterdrücken könnten, führt wegen der separaten Abtrennung und Aufarbeitung des verwendeten organischen Lösungsmittels zu zusätzlichen Verfahrensschritten und unvorteilhaft hohen Verfahrenskosten.

Die Partikel neigen bei Kontakt mit Wasser, Wasserdampf oder wäßrigen Lösungen nicht nur zum Verbacken untereinander, sondern auch zum Anbacken an Förder- oder Rührorganen sowie an Reaktorwänden. In der Monomerlösung schlecht verteilte, grobe, durch Verbacken entstandene wasserquellbare Polymerpartikel sedimentieren leichter und können am Boden des Polymerisationsreaktors, z.B. einem Förderband, feste Schichten bilden, die stark anhaften und auch der Zerkleinerung des Polymergels großen Widerstand entgegensetzen.

Aufgabe der Erfindung ist daher die Bereitstellung eines wirtschaftlichen, verfahrenstechnisch einfachen Verfahrens, das es ermöglicht, unter Vermeidung von organischen Lösungsmitteln sowie aufwendiger zusätzlicher Trocknung die wasserquellbaren polymeren Feinstpartikel, die zwangsläufig in einem nach den beschriebenen Verfahren hergestellten wasserquellbaren Polymeren enthalten sind, in eine anwendungstechnisch aktzeptable, d.h. wiederverwertbare Form zu bringen.

Diese Aufgabe wird erfindungsgemäß durch folgende Schritte gelöst:
a) man dispergiert die wasserquellbaren polymeren Feinstanteile in einem bei Raumtemperatur flüssigen Monomeren, das die polymeren Feinstanteile nicht anquillt,
b) man vermischt die erhaltene Dispersion mit einer wäßrigen Monomerlösung,
c) man polymerisiert die erhaltene Mischung durch Zugabe von Katalysatoren und/oder Belichtung,
d) man zerkleinert, trocknet und mahlt das resultierende Polymergel.

Als Monomere, welche die wasserquellbaren polymeren Feinstpartikel nicht anquellen, werden flüssige Monomere, bevorzugt Acrylsäure, Methacrylsäure, Ester der (Meth-)Acrylsäure, Vinylacetat, Vinylpyrrolidon, Dimethylamino-alkyl-(meth-)acrylate, Dialkylaminoalkyl-(meth-)acrylamide oder Mischungen dieser Monomeren verwendet. Die aus den wasserquellbaren polymeren Feinstpartikeln und den vorstehenden, bei Raumtemperatur flüssigen Monomeren, welche die Feinstpartikel nicht anquellen, gebildete Dispersion wird sodann mit einer wäßrigen Monomerlösung vermischt, wobei bevorzugt die Dispersion in die wäßrige Monomerlösung gegeben wird. Die wäßrige Monomerlösung enthält vorzugsweise Katalysatoren sowie andere übliche bei der Polymerisation verwendeten Zusätze. Die Polymerisation kann nach bekannten Methoden erfolgen, sie kann z.B. statt durch Katalysatoren auch durch Strahlung initiiert werden.

Bevorzugt wird als Monomeres Acrylsäure verwendet, d.h. die wasserquellbaren polymeren Feinstanteile werden zunächst in Acrylsäure dispergiert und dann einer wäßrigen Acrylsäurelösung zudosiert. Es ist jedoch auch möglich, zur Bildung der Dispersion der polymeren Feinstanteile und zur Herstellung einer wäßrigen Monomerlösung unterschiedliche Monomere einzusetzen, z.B. Acrylsäure/wässrige Acrylamidlösung.

Beispielsweise wird zur Dispergierung der Feinstpartikel derjenige Anteil an Acrylsäure verwendet, der in der gesamten Monomerenmischung als nicht neutralisierter Anteil vorliegt.

Das Vermischen der Dispersion aus wasserquellbaren polymeren Feinstanteilen und die Feinstanteile nicht anquellenden flüssigen Monomeren mit der wässrigen Monomerlösung erfolgt bevorzugt kurz vor dem Beginn des Polymerisationsschritts, d.h. kurz vor Eintritt in den Polymerisationsreaktor und dem sofortigen Start der Polymerisationsreaktion.

Bei Verwendung von Acrylsäure als nicht anquellendes, flüssiges Monomeres ist es hierbei überraschenderweise nicht erforderlich, die Acrylsäure-Feinstanteile-Dispersion von geringen Mengen Sauerstoff, beispielsweise durch Aufblasen mit Stickstoff zu befreien, bevor die Zugabe der Dispersion zur wässrigen Monomerenlösung erfolgt.

Die in der ersten Verfahrensstufe erhaltene Dispersion wird auf einen Gehalt von 0,5 bis 50 Gew.-% an polymeren Feinstanteilen bevorzugt 5 bis 40 Gew.-% eingestellt.

Nach Vermischen dieser in der ersten Stufe erhaltenen Dispersion gemäß zweiter Verfahrensstufe mit einer wäßrigen Monomerlösung beträgt der Gehalt an polymeren Feinstanteilen, bezogen auf Gesamtmonomere vorteilhaft 0,1 bis 30 Gew.-%, bevorzugt 0,5 bis 20 Gew.-%.

Die polymeren Feinstanteile enthalten oder bestehen aus teilneutralisierten, vernetzten, Hydrogel bildenden natürlichen und/oder synthetischen Polymeren, wobei als synthetische Polymere die vernetzten wasserquellbaren Polyacrylate bevorzugt werden.

Die wasserquellbaren polymeren Feinstanteile, die während der Polymerisationsstufe zugegen sind, weisen eine Korngröße von kleiner als 200 $\mu$m, vorzugsweise kleiner als 100 $\mu$m auf.

Die Menge an rückgeführten feinteiligen Polymeren wird bestimmt durch die zur Verfügung stehende Menge an flüssigem Monomeren. Die Handhabbarkeit der Suspension aus rückgeführtem Feinstaub und flüssigem Monomeren muß gegeben sein. Beispielsweise steht bei der vernetzenden Polymerisation einer Lösung aus 30 Mol% Acrylsäure und 70 Mol% Natriumacrylat genügend Acrylsäure zur Rückführung von 15 Gew.-% polymerem Feinstaub, bezogen auf Gesamtmonomere, zur Verfügung, um eine pumpfähige Suspension aus polymerem Feinstaub und Acrylsäure zu erzeugen.

Das erfindungsgemäße Verfahren kann batchweise oder kontinuierlich durchgeführt werden. Bevorzugt ist die kontinuierliche Verfahrensweise.

Bei kontinuierlicher Ausführung des Polymerisationsverfahrens mit Rückführung von Feinstanteilen wird eine wäßrige Alkali- oder Ammoniumacrylatlösung, die ein vernetzend wirkendes Monomeres enthält, durch Spülen mit Stickstoff weitgehend vom gelösten Sauerstoff befreit und über eine Rohrleitung in den Reaktionsraum gefördert. Gleichzeitig wird ein Pulverstrom aus wasserquellbarem Polymeren kontinuierlich mit einem bei Raumtemperatur flüssigen Monomeren oder einer Mischung von Monomeren, die die polymeren Feinstanteile nicht anquellen, vermischt und kurz vor Eintritt in den Reaktionsraum mit der wäßrigen Monomerlösung vereinigt. Durch Zugabe von bekannten Katalysatoren bzw. Katalysatorsystemen und/oder Belichtung wird die Polymerisation gestartet. Das gewonnene feste Gel wird grob vorzerkleinert und getrocknet. Nach Trocknen erfolgt die Mahlung und Abtrennung von Über- und Unterkorn.

Zur Charakterisierung der wasserabsorbierenden Harze wird das pulverförmige Harz auf 100 - 850 $\mu$m abgesiebt und diese Fraktion auf Retention, Restmonomere und extrahierbare Anteile geprüft.

Die Retention wird nach der Teebeutelmethode bestimmt und als Mittelwert aus drei Messungen angegeben: ca. 200 mg Harz werden in einen Teebeutel eingeschweißt und für 10 Minuten in 0,9 %ige NaCl-Lösung getaucht. Anschließend wird der Teebeutel in einer Zentrifuge (Durchmesser 23 cm) bei 1.400 Upm 5 Minuten geschleudert und gewogen. Einen Teebeutel ohne wasserabsorbierendes Harz läßt man als Blindwert mitlaufen:

$$\textbf{Retention} \quad = \quad \frac{\textbf{Auswaage - Blindwert}}{\textbf{Einwaage}} \quad \textbf{g/g}$$

Zur Bestimmung der extrahierbaren Anteile werden 0,2 g Polymeres der Korngröße 100 bis 850 $\mu$m in 100 g 0,9 %iger Kochsalzlösung 1 Stunde bzw. 16 Stunden lang gerührt. Im Filtrat dieser Mischung werden die Carboxylgruppen potentiometrisch titriert und unter Berücksichtigung des Neutralisationsgrades des Polymeren der lösliche Anteil des Polymeren berechnet.

Das erfindungsgemäße Verfahren weist mehrere Vorteile auf:

Durch die Vordispergierung in einem das Polymere nicht quellenden Medium wird vorteilhaft eine zeitliche Einschränkung im Ablauf des Verfahrens vermieden. Die Dispersion ist über längere Zeit handhabbar. Außerdem ist eine bessere Verteilung auch größerer Mengen pulverförmiger, feinteiliger Substanzen in der wäßrigen Monomerlösung gegeben. Das das Polymere nicht quellende, flüssige Medium ist nicht artfremd, sondern ein Bestandteil der gesamten Monomerlösung. Der Kontakt der wasserquellbaren, polymeren Feinstpartikel mit einem wäßrigen System erfolgt erst kurz vor dem Eintritt in den Polymerisationsreaktor, z.B. einem bewegten Förderband. Ein Verkleben der Feinstpartikel durch Kontakt mit wäßrigen Lösungen oder Wasserdampf oder ein Quellen der Polymerpartikel sowie Anbacken an Wandungen wird so ausgeschlossen. Durch die beschriebenen Maßnahmen wird eine Rückführung des wasserquellbaren Polymeren in den Polymerisationsschritt ermöglicht.

Das beschriebene Verfahren bietet noch einen weiteren, überraschenden Vorteil. Die anwendungstechnischen Kenndaten des unter Zusatz von großen Mengen polymerem, wasserquellbarem Feinstaub erhaltenen wasserquellbaren Polymeren werden weitgehend von der Zusammensetzung des Polymerisationsansatzes und der Art und Menge der Katalysatoren und nicht durch die Kenndaten der Feinstpartikel, wie z.B. Quellkapazität und extrahierbare Anteile, bestimmt. Diese Erkenntnis bietet die Möglichkeit, Feinstpartikel mit unterschiedlichen Vernetzungsgraden, Feinstpartikel mit vom Monomerenansatz abweichendem Neutralisationsgrad einzusetzen.

Weiterhin können durch Zusatz zum wasserfreien flüssigen Monomeren andere wasserquellbare, synthetische und/oder natürliche Polymere und/oder deren Derivate, wie z.B. Polyvinylalkohol, Polyvinylpyrrolidon, Stärke, Cellulose, Guar, Hydroxyethyl- und Carboxymethylcellulose als feinteiliges Pulver eingesetzt und als Dispersion dem wäßrigen Monomerenansatz direkt vor der Polymerisation zugesetzt werden.

Die Erfindung wird durch die nachfolgenden Beispiele erläutert:

Beispiel 1:

In einem zylindrischen Kunststoffgefäß wird eine Monomerlösung aus 187,2 g Acrylsäure, 368,1 g vollentsalztem Wasser und 1,33 g Methylenbisacrylamid angesetzt. Unter Rühren und Kühlen wird mit 229 g 45 %iger Natronlauge neutralisiert. Die Lösung wird auf 6 °C abgekühlt und mit Stickstoff gespült. Anschließend gibt man 1 g Azo-bis-(2-amidinopropan)-dihydrochlorid, gelöst in 10 g Wasser, 0,044 g 35 %iges Wasserstoffperoxid, verdünnt mit 2 g Wasser und 0,8 g Natriumperoxidisulfat, gelöst in 5 g Wasser, hinzu. In die Reaktionslösung wird nun eine Suspension aus 60 g polymeren Feinstpartikeln und 78 g Acrylsäure eingetragen, die in einem separaten Gefäß hergestellt wird. Das Feinstpulver von einer Korngröße kleiner 100 μm besteht aus einem schwach vernetzten Polyacrylat mit einem Teebeutelretentionswert von 36 g/g und einem extrahierbaren Anteil nach 16 Stunden von 18%. Mit der Zugabe der Suspension zu der Monomerlösung wird durch Hinzufügen von 0,027 g Ascorbinsäure, gelöst in 2 g Wasser, die Polymerisation gestartet, erkennbar an der Temperaturerhöhung der Monomerlösung bis auf 98 °C. Nach 30 Minuten wird der entstandene Gelblock zerkleinert und mit Heißluft bei 150 °C getrocknet. Das Polymere wird anschließend gemahlenen und auf ein Kornspektrum von 100 - 850 μm abgesiebt.

Das wasserabsorbierende Polymer weist folgende Eigenschaften auf:

| | |
|---|---|
| Retention: | 28,1 g/g |
| Extrahierbare Anteile: | 6,5 % (nach 16 Stunden) |
| Rest-Acrylsäure: | 335 ppm |

Beispiel 2:

Verfahren wird wie in Beispiel 1, nur mit der Maßnahme, daß polymere Feinstanteile, die durch Mahlen eines Stärke-Acrylsäure-Pfropfpolymeren mit der Bezeichnung Sanwet IM 1000 der Fa. Sanyo Chem. Ind. auf kleiner 100 μm gewonnen wurden, eingesetzt (dispergiert) werden.

| | |
|---|---|
| Retention: | 29 g/g |
| extrahierbare Anteile: | 7,2 % (16 Stunden-Wert) |
| Rest-Acrylsäure: | 420 ppm |

Beispiel 3:

Verfahren wird wie in Beispiel 2, jedoch wird ein Feinstpulver mit einer Teilchengröße kleiner 200 μm eingesetzt, das durch Polymerisation von Acrylsäure in Gegenwart von 4 % Polyvinylalkohol in der Monomerlösung nach Beispiel 4, jedoch ohne Zusatz von Feinstpulver, erhalten wurde.

Kenndaten:

| Retention: | 26 g/g |
|---|---|
| Extrahierbare Anteile: | 4,0 % (nach 1 Stunde) |
| Rest-Acrylsäure: | 490 ppm |

## Beispiel 4:

Auf ein Förderband wird eine auf 8°C gekühlte und mit Stickstoff gespülte Monomerenlösung, erhalten durch Lösen von 1326,6 g Acrylsäure und 19,1 Triallylamin in 2146,9 g Wasser und Neutralisation mit 1497,4 g 45%iger Natronlauge, pro Stunde dosiert. Gleichzeitig wird in den Strom der Monomerlösung eine Dispersion aus 426,7 g Acrylsäure und 213,3 g Feinstpulver pro Stunde eingetragen. Außerdem werden separat Lösungen aus 3,4 g Formamidinsulfinsäure in 166,6 g Wasser, 13,03 g tert. Butylhydroperoxid in 186,97 g Wasser und 0,26 g Ascorbinsäure in 199,74 g Wasser pro Stunde kontinuierlich zudosiert. Die Polymerisation läuft innerhalb von 20 Minuten unter Temperaturerhöhung auf ca. 100°C unter Ausbildung eines Gelstranges ab, der anschließend zerkleinert und bei 150°C mit Heißluft getrocknet wird. Das Polymer wird dann gemahlen und auf eine Korngröße von 100 - 850 μm abgesiebt. Das eingesetzte Feinstpulver mit einer Korngröße kleiner 100 μm stammt aus einer kont. Lösungspolymerisation nach diesem Beispiel, jedoch ohne Zusatz von polymeren Feinstpartikeln.

Das Endprodukt weist folgende Kenndaten auf:

| Retention: | 25,5 g/g |
|---|---|
| Extrahierbare Anteile: | 4,5 % (nach 1 Stunde) |
| Rest-Acrylsäure: | 220 ppm |

## Beispiel 5:

In der gleichen Verfahrensweise wie in Beispiel 4 werden 213,3 g pro Stunde Feinstpartikel mit einer Korngröße kleiner 100 μm aus Beispiel 4 verwendet und die Vernetzermenge an Triallylamin auf 14 g pro Stunde gesenkt.

Das erhaltene Produkt zeigt folgende Kenndaten:

| Retention: | 28,5 g/g |
|---|---|
| Extrahierbare Anteile: | 6,5 % (nach 1 Stunde) |
| Rest-Acrylsäure: | 280 ppm |

## Beispiel 6:

Beispiel 5 wird wiederholt mit der Maßnahme, daß der polymere Feinstanteil mit einer Korngröße kleiner 100 μm aus Beispiel 4 eingesetzt und die Vernetzermenge auf 4,4 g pro Stunde reduziert wird.

Kenndaten:

| Retention: | 35,1 g/g |
|---|---|
| Extrahierbare Anteile: | 7,7 % (nach 1 Stunde) |
| Rest-Acrylsäure: | 385 ppm |

Beispiel 7:

Beispiel 6 wird wiederholt mit der Maßnahme, daß 20 Gew.-% der zur Dispergierung der polymeren Feinstpartikel verwendeten Acrylsäure durch Methylacrylsäure ersetzt werden.

Kenndaten:

| Retention: | 36,5 g/g |
|---|---|

# Beispiel 8:

Beispiel 7 wird wiederholt mit der Maßnahme, daß die zur Verwendung der polymeren Feinstpartikel verwendete Methacrylsäure durch Vinylacetat ersetzt wird.

Kenndaten:

| Retention: | 32,5 g/g |
|---|---|

Beispiel 9:

Eine auf 6°C gekühlte, mit Stickstoff gespülte, teilneutralisierte Monomerlösung, bestehend aus 1220,3 g Acrylsäure, 4,1 g Triallylamin, 2400 g Wasser und 1365 g 45%iger Natronlauge, wird stündlich über ein Rohr auf ein Förderband dosiert. Gleichzeitig wird in den Strom der Monomerlösung eine Dispersion aus 226,6 g Starke und 453,4 g Acrylsäure pro Stunde dosiert. Außerdem werden zur Auslösung der Polymerisation Lösungen aus 6,22 g tertiärem Butylhydroperoxid in 197,78 g Wasser, 9,33 g Azo-bis-(2-amidinopropan)dihydrochlorid in 190,67 g Wasser und 0,26 g Ascorbinsäure in 199,74 g Wasser pro Stunde kontinuierlich zugesetzt. Die Polymerisation läuft innerhalb von 20 Minuten unter Termperaturerhöhung auf ca. 95°C und unter Ausbildung eines Gelstranges ab, der nach der Zerkleinerung bei 120°C mit Heißluft getrocknet wird. Das grobe Polymere wird gemahlen und auf eine Korngröße von 200 bis 850 $\mu$m abgesiebt.

Kenndaten:

| Retention: | 30,4 g/g. |
|---|---|

**Patentansprüche**

1. Verfahren zur Herstellung wasserquellbarer Produkte auf der Basis von teilneutralisierten, vernetzten natürlichen und/oder synthetischen Polymeren unter Verwendung von Feinstanteilen wasserquellbarer Polymerer, das durch folgende Schritte gekennzeichnet ist:

   a) Dispergieren der wasserquellbaren polaren Feinstanteile einer Korngröße kleiner 200 $\mu$m, die teilneutralisierte natürliche und/oder synthetische Polymere enthalten oder daraus bestehen in einem bei Raumtemperatur flüssigen Monomeren, das die polymeren Feinstanteile nicht anquillt und das ausgewählt ist aus der Gruppe, welche aus Acrylsäure, Methacrylsäure, einem Ester der (Meth-)acrylsäure, Vinylacetat, Vinylpyrrolidon, Dimethylamino-alkyl-(meth-)acrylat, Dialkylaminoalkyl-(meth-)acrylamind oder Mischungen dieser Monomeren besteht, zu einer Dispersion mit einem Gehalt an Feinstanteilen von 0,5 bis 50 Gew.-%

7

b) Vermischen der in Stufe a) erhaltenen Dispersion mit einer wässrigen, einen Vernetzer enthaltenden Monomerlösung eines der in Stufe a) verwendeten Monomeren zu einer Dispersion, in der der Gehalt an polymeren Feinstanteilen, bezogen auf Gesamtmonomere 0,1 bis 30 Gew.-% beträgt,

c) Polymerisation der in Stufe b) erhaltenen Mischung mittels Katalysatoren und/oder Belichtung sowie

d) Zerkleinern und Trocknen des Polymergels

2. Verfahren nach Anspruch 1, dadurch gekennzeichnet, daß das Vermischen der Dispersion mit der wäßrigen Monomerlösung gemäß Stufe b) kurz vor Beginn der Polymerisation nach Stufe c) erfolgt.

3. Verfahren nach den Ansprüchen 1 bis 2, dadurch gekennzeichnet, daß in Stufe a) eine Dispersion mit einem Gehalt an Feinstanteilen von 5 bis 40 Gew.-% hergestellt wird.

4. Verfahren nach den Ansprüchen 1 bis 3, dadurch gekennzeichnet, daß nach Vermischen dar in Stufe a) erhaltenen Dispersion mit einer wäßrigen Monomerlösung der polymere Feinstanteil 0,5 bis 20 Gew.-%, bezogen auf Gesamtmonomere, beträgt.

5. Verfahren nach Anspruch 4, dadurch gekennzeichnet, daß die wasserquellbaren Polymeren vernetzte teilneutralisierte Polyacrylate sind oder diese enthalten.

6. Verfahren nach Anspruch 1 bis 5, dadurch gekennzeichnet, daß wasserquellbare, polymere Feinstanteile mit einer Korngröße kleiner 100 μm in Stufe a) dispergiert und nach Vermischen der Dispersion gemäß Stufe b) in Stufe c) polymerisiert werden.

7. Verfahren nach einem der Ansprüche 1 bis 6, dadurch gekennzeichnet, daß zur Dispergierung der wasserquellbaren polymeren Feinstanteile in Stufe a) und für die wäßrige Monomerlösung gemäß Stufe b) gleich oder verschiedenene Monomere verwendet werden.

8. Verfahren nach Anspruch 7, dadurch gekennzeichnet, daß man für die Herstellung der Dispersion nach Stufe a) Acrylsäure und für die wäßrige Monomerlösung nach Stufe b) Acrylsäure oder teilneutralisierte Acrylsäure verwendet.

**Claims**

1. A process for the production of water-swellable products based on partially neutralized, cross-linked natural and/or synthetic polymers by using superfine particles of water-swellable polymers, characterized by the following steps:

a) dispersing the water-swellable polymeric superfines, which have a particle size of smaller than 200 μm and comprise partially neutralized natural and/or synthetic polymers or which consist of these polymers, in a monomer which is liquid at room temperature and does not cause the polymeric superfines to swell and that is selected from the group consisting of acrylic acid, methacrylic acid, an ester of the (meth-)acrylic acid, vinyl acetate, vinyl pyrrolidone, dimethylaminoalkyl-(meth-)acrylate, dialkylaminoalkyl-(meth-)acrylamide, or mixtures of these monomers, to form a dispersion having a content of superfines of 0.5 to 50%-wt.,

b) mixing the dispersion obtained in step a) with an aqueous monomer solution of a monomer used in step a), which comprises a cross-linking agent, to form a dispersion wherein the content of polymeric superfines, relative to the total amount of monomers, amounts to 0.1 to 30%-wt.,

c) polymerizing the mixture obtained in step b) by means of catalysts and/or by exposure to light or irradiation, and

d) comminuting and drying the polymer gel.

2. The process according to claim 1 characterized in that mixing the dispersion with the aqueous monomer solution according to step b) is effected shortly before starting the polymerization according to step c).

3. The process according to claims 1 to 2 characterized in that a dispersion having a superfines content of 5 to 40%-wt. is produced in step a).

4. The process according to claims 1 to 3 characterized in that, after mixing the dispersion obtained in step a) with an aqueous monomer solution, the portion of polymeric superfines amounts to 0.5 to 20%-wt., relative to the total amount of monomers.

5. The process according to claim 4 characterized in that the water-swellable polymers are cross-linked, partially neutralized polyacrylates or that they comprise the same.

6. The process according to claims 1 to 5 characterized in that water-swellable polymeric superfines having a particle size of smaller than 100 $\mu$m are dispersed in step a) and, after mixing the dispersion in accordance with step b), are polymerized in step c).

7. The process according to any one of claims 1 to 6 characterized in that the same or different monomers are used for dispersing the water-swellable polymeric superfines in step a) and for the aqueous monomer solution according to step b).

8. The process according to claim 7 characterized in that acrylic acid is used for producing the dispersion according to step a) and that acrylic acid or partially neutralized acrylic acid is used for the aqueous monomer solution according to step b).

## Revendications

1. Procédé de fabrication de produits gonflables à l'eau à base de polymères naturels et/ou synthétiques, réticulés, partiellement neutralisés, en recourant à l'emploi de fines de polymères gonflables à l'eau, caractérisé en ce qu'il comprend les étapes consistant à :
   a) disperser des fines de polymères gonflables dans l'eau, d'un calibre des particules inférieur à 200 $\mu$m, qui contiennent des polymères naturels et/ou synthétiques, partiellement neutralisés ou qui en sont constitués, dans un monomère liquide à la température ambiante, qui ne fait pas gonfler les fines de polymères et qui est choisi dans le groupe formé par l'acide acrylique, l'acide méthacrylique, un ester de l'acide (méth)acrylique, l'acétate de vinyle, la vinylpyrrolidone, un (méth)acrylate de diméthylaminoalkyle, un dialkylaminoalkyl(méth)acrylamide,ou des mélanges de ces monomères, jusqu'à obtenir une dispersion d'une teneur en fines de 0,5 à 50% en poids;
   b) mélanger la dispersion obtenue à l'étape a) avec une solution aqueuse de monomère contenant un agent de réticulation d'un des monomères utilisés dans l'étape a), de manière à obtenir une dispersion dans laquelle la teneur en fines de polymères varie de 0,1 à 30% en poids, par rapport aux monomères totaux;
   c) polymériser le mélange obtenu dans l'étape b) à l'aide de catalyseurs et/ou sous irradiation, ainsi que
   d) broyer et sécher le gel de polymère.

2. Procédé suivant la revendication 1, caractérisé en ce que le mélange de la dispersion à la solution aqueuse de monomère de l'étape b) s'effectue peu avant l'amorce de la polymérisation de l'étape c).

3. Procédé suivant l'une quelconque des revendications 1 et 2, caractérisé en ce que l'on prépare une dispersion d'une teneur en fines de 5 à 40% en poids au cours de l'étape a).

4. Procédé suivant l'une quelconque des revendications 1 à 3, caractérisé en ce qu'après le mélange de la dispersion obtenue dans l'étape a) à la solution aqueuse de monomère, les fines de polymères représentent de 0,5 à 20% en poids, par rapport aux monomères totaux.

5. Procédé suivant la revendication 4, caractérisé en ce que les polymères gonflables à l'eau sont des polyacrylates réticutés, partiellement neutralisés, ou contiennent ceux-ci.

6. Procédé suivant l'une quelconque des revendications 1 à 5, caractérisé en ce que l'on disperse des fines de polymères, gonflables à l'eau, d'un calibre des particules inférieur à 100 $\mu$m dans l'étape a) et en ce qu'on les polymérise après le mélange de la dispersion selon l'étape b) dans l'étape c).

7. Procédé suivant l'une quelconque des revendications 1 à 6, caractérisé en ce que l'on utilise des monomères identiques ou différents pour la dispersion des fines de polymères gonflables à l'eau dans l'étape a) et pour la solution aqueuse de monomère de l'étape b).

8. Procédé suivant la revendication 7, caractérisé en ce que l'on utilise de l'acide acrylique pour la préparation de la dispersion de l'étape a) et on utilise de l'acide acrylique ou de l'acide acrylique partiellement neutralisé pour la solution aqueuse de monomère de t'étape b).